# EUROPEAN PATENT APPLICATION

(11) **EP 3 473 913 A1**
(43) Date of publication of application: **24.04.2019**
(21) Application number: 17798089.3
(22) Date of filing: 19.09.2017
(51) Int. Cl.: F16M 11/04, F16M 11/16, F16M 13/04, F16B 2/12, F16M 13/00, G03B 17/56, H04M 1/02

(54) **CLAMPING MECHANISM AND HANDHELD STABILIZER**

(30) Priority: 06.09.2017 CN 201710797199
(71) Applicant: GUANGDONG SIRUI OPTICAL CO., LTD, Zhongshan, Guangdong 528458 (CN)
(72) Inventor: LI, Jie, Zhongshan, Guangdong 528458 (CN); HE, Guoqiang, Zhongshan, Guangdong 528458 (CN)
(74) Representative: Lavoix
(86) International application number: PCT/CN2017/102173
(87) International publication number: WO 2019/047266

(57) **Abstract**

The present invention relates to the technical field of photographing equipment, and in particular relates to a holding mechanism and a handheld stabilizer, wherein, the holding mechanism comprises: a holding base, having two oppositely arranged holding grippers provided thereon, wherein, at least one of the two holding grippers is a movable holding gripper, which is able to move back and forth relative to the holding base so as to move towards or away from the other holding gripper; a first resilient biasing member, provided between the holding base and the movable holding gripper, and exerting an elastic biasing force on the movable holding gripper to cause the movable holding gripper to have a tendency to return to its initial position; and the holding mechanism further comprises a locking structure and an unlocking component respectively provided on the holding base, wherein, the movable holding gripper is operable to move to a trigger position in a direction away from the other holding gripper when an external force is exerted thereon, and the locking structure is triggered to lock the movable holding gripper when the movable holding gripper reaches the trigger position, so as to block the movable holding gripper from returning to its initial position; the unlocking component is configured to unlock the locking structure, so as to remove the blockage of the locking structure to the movable holding gripper. By means of the holding mechanism and the handheld stabilizer provided by the present invention, the holding grippers can be automatically kept at the open position, and can automatically return to the initial position for gripping.

## Description

### Technical Field

The present invention relates to the technical field of photographing equipment, and in particular relates to a holding mechanism and a handheld stabilizer.

### Background

With rapid development of smart terminals, terminal devices such as smart phones and tablet computers are providing more and more aid in users' life, work and entertainment, especially, as social media is well developed, the applications in the aspect of video-taking and photograph-taking has become increasingly widespread. In order to enhance the stability of photographing in a moving process and prevent tilting due to shaking of the photographer, there is provided a handheld stabilizer in the prior art, which has a holding mechanism for gripping a photographing device, a drive unit able to drive the holding mechanism to rotate, a measuring unit for measuring a spatial angle of the photographing device and a controller for controlling the motion of the drive unit. When the photographing device is tilted, the measuring unit detects the tilted angle of the photographing device, and after calculation is done by a processing module of the controller, a signal is sent to a control module so as to actuate the drive unit to drive the holding mechanism to rotate for a certain angle, until the photographing device comes into a horizontal or vertical state, thereby maintaining the photographed picture in a horizontal or vertical orientation.

The handheld stabilizer in the prior art usually has a holding base and two resilient holding grippers provided on the holding base. When used by a user, one or two of the holding grippers need to be manually separated and then manually held at an open position, and after a photographing device is put between the two holding grippers, the holding grippers are released and return to their initial positions, under a returning force exerted by a resilient biasing member, so as to grip the photographing device and prepare the device for photographing. Although this kind of holding mechanism can resiliently grip the photographing device by allowing the holding grippers to automatically return to their initial positions, the following inconvenience still exists: when the user is in an outdoor environment or some other complicated environment, with a lot of objects carried over his/her body or in his/her hands, if he/she wants to fasten a photographing device onto the holding mechanism, at least one of his/her hands must be freed to hold the holding gripper(s) at the open position, and the other hand is used to put the photographing device between the holding grippers; at the same time of holding the holding gripper(s), the user must grasp the stabilizer and the photographing device, which is very inconvenient, and the stabilizer or the photographing device could easily get dropped once there is a careless manipulation, which negatively affects the photographing; even if other components on the holding mechanism can be manipulated to keep the holding grippers at the open position after the two holding grippers are manually separated, it still needs the user to perform the operation at the same time of manually holding the holding grippers in place, which is inconvenient for use.

### Summary of the Invention

Thus, a technical problem to be solved by the present invention is to overcome the defect in the prior art that the use of the holding mechanism is inconvenient because the holding grippers thereof can only be kept at the open position by manual holding or by manipulating other components on the holding mechanism. For this purpose, the present invention provides a holding mechanism that can be automatically kept at the open position and can automatically return to the initial position for gripping.

A handheld stabilizer having the above-mentioned holding mechanism is further provided.

The technical scheme adopted by the present invention is as follows:
A holding mechanism comprises a holding base, having two oppositely arranged holding grippers provided thereon, wherein, at least one of the two holding grippers is a movable holding gripper, which is able to move back and forth relative to the holding base so as to move towards or away from the other holding gripper; a first resilient biasing member, provided between the holding base and the movable holding gripper, and exerting an elastic biasing force on the movable holding gripper to cause the movable holding gripper to have a tendency to return to its initial position; and the holding mechanism further comprises a locking structure and an unlocking component respectively provided on the holding base; the movable holding gripper is operable to move to a trigger position in a direction away from the other holding gripper when an external force is exerted thereon, and the locking structure is triggered to lock the movable holding gripper when the movable holding gripper reaches the trigger position, so as to block the movable holding gripper from returning to its initial position under the force exerted by the first resilient biasing member; the unlocking component is configured to unlock the locking structure, so as to remove the blockage of the locking structure to the movable holding gripper.

The locking structure comprises a blocking structure provided on the holding base and movable between a locking position and a non-locking position; a second resilient biasing member provided between the holding base and the blocking structure, for exerting an elastic biasing force on the blocking structure, when the movable holding gripper is at the initial position, the blocking structure is constrained at the non-locking position by the movable holding gripper, so that the movable holding gripper is able to move back and forth from the initial position to a position not surpassing the trigger position; when the movable holding gripper is moved to surpass the trigger position by an external force, the constraint to the blocking structure is released, so that the blocking structure is able to move from the non-locking position to the locking position under the force exerted by the second resilient biasing member, where the movable holding gripper is blocked from moving towards the initial position; wherein, the unlocking component provided on the holding base, with an external force, is able to overcome the force exerted by the second resilient biasing member and drive the blocking structure to return to the non-locking position, so that the movable holding gripper returns to the initial position under the force exerted by the first resilient biasing member, where the blocking structure is constrained.

The constraint to the blocking structure is released when an end face of the movable holding gripper which faces the other holding gripper reaches the trigger position.

Both of the holding grippers are movable holding grippers.

The movable holding gripper has a gripping portion and a sliding portion slidably connected to the holding base, when the blocking structure is in an unlocked state, an accommodation space for the sliding portion to be inserted into is formed in the blocking structure or between the blocking structure and the holding base, the movable holding gripper is in a slidable fitting with the accommodation space until the movable holding gripper moves to the trigger position where the sliding portion slips out of the accommodation space, and then the blocking structure moves to the locking position where the accommodation space is unaligned with the sliding portion under the force exerted by the second resilient biasing member, so that the blocking structure abuts against an end face of the sliding portion; the unlocking component is able to drive the blocking structure to return to the non-locking position where the accommodation space is aligned with the sliding portion, so that the sliding portion retracts into the accommodation space under the force exerted by the first resilient biasing member so as to cause the movable holding gripper to return to the initial position.

The blocking structure comprises one blocking member disposed between the two holding grippers, when at least one of the holding grippers is moved such that the distance between the two holding grippers becomes larger than the width of the blocking member along the moving direction of the at least one of the holding gripper, the trigger position is reached.

The moving direction of the blocking structure is perpendicular to the moving direction of the at least one of the holding grippers.

The locking structure comprises a second guide structure for guiding the movement of the blocking structure.

The second guide structure comprises a guide strip provided on the holding base and a second guide groove provided on the blocking structure which slidably engages with the guide strip; or, the second guide structure comprises a second guide groove provided on the holding base and a guide strip provided on the blocking structure which slidably engages with the second guide groove.

The second resilient biasing member is a second resilient pressure spring arranged along the guiding direction of the second guide structure, one axial end of the second resilient pressure spring abuts against the holding base, and the other axial end of the second resilient pressure spring abuts against the blocking structure.

The blocking structure has a blind hole for receiving the second resilient pressure spring, and said other axial end of the second resilient pressure spring extends into the blind hole so as to abut against the blocking structure.

The unlocking component comprises a reset button provided on one side of the blocking structure which is away from the second resilient biasing member, and a button hole provided in the holding base for the reset button to pass through, when the reset button is pressed down, the reset button drives the blocking structure to move to the non-locking position.

The holding mechanism further comprises a first guide structure provided on the holding base, the at least one of the holding grippers is able to move back and forth relative to the holding base by means of the first guide structure.

The first guide structure comprises a guide bar provided on the holding base, a first guide groove provided on the at least one of the holding grippers for the guide bar to pass along, and a stopper member for preventing the at least one of the holding grippers from slipping off the guide bar; the guide bar is disposed to extend through the accommodation space.

The stopper member is a stopper block provided on one end of the guide bar pointing towards the gripping portion, the first guide groove is disposed on the sliding portion of the at least one of the holding grippers, the first guide groove is able to slide past the stopper block, one end of the first guide groove away from the gripping portion is a closed end and is formed with a guide hole for the guide bar to pass through, the closed end of the first guide groove is able to abut against the stopper block so as to stop the sliding portion from slipping off the guide bar.

The first resilient biasing member is a first resilient pressure spring sleeved on the guide bar, one axial end of the first resilient pressure spring abuts against the closed end of the first guide groove, and the other axial end of the first resilient pressure spring abuts against the stopper block.

The holding mechanism further comprises a holding base cover for forming a mounting space with the holding base the sliding portion of the at least one of the holding grippers, the first resilient biasing member and the locking structure are all disposed within the mounting space.

A soft pad is provided on a surface of the holding base cover.

A handheld stabilizer comprising the aforementioned holding mechanism is also provided.

A handle of the handheld stabilizer is provided with a storage battery therein, and the handle has a recharging port for supplying power to the storage battery and/or electronic devices therein.

The handle also has an indicator light for indicating a battery level of the storage battery.

A mirror is provided on one side of the handle away from the holding mechanism.

A fill light is provided on one side of the handle away from the holding mechanism, and the handle has a fill light button for controlling the switching on and switching off of the fill light.

The handle has a photographing button for controlling the photographing operation of a photographing device.

The technical scheme of the present invention has the following advantages:
1. The holding mechanism provided by the present invention comprises a holding base, a pair of holding grippers provided on the holding base, a first resilient biasing member, a locking structure and an unlocking component, wherein, at least one of the pair of holding grippers is a movable holding gripper which is able to move back and forth relative to the holding base so as to move towards or away from the other holding gripper and is able to return to its initial position under a force exerted by the first resilient biasing member; the movable holding gripper is operable to move to a trigger position in a direction away from the other holding gripper when an external force is exerted thereon, and the locking structure is triggered to lock the movable holding gripper when the movable holding gripper reaches the trigger position, so as to block the movable holding gripper from returning to its initial position; the unlocking component is configured to unlock the locking structure, so as to remove the blockage of the locking structure to the movable holding gripper such that the movable holding gripper is released and returns to its initial position for gripping. Such configuration allows the movable holding gripper of the holding mechanism to automatically become locked once pulled to reach the trigger position, without requiring manual holding or manipulating other components for locking the movable holding gripper; after the movable holding gripper becomes automatically locked, the movable holding gripper can be maintained in an open state when a photographing device is put on the holding base; then, by actuating the unlocking component, the blockage of the locking structure to the movable holding gripper is removed, so that the movable holding gripper is released and automatically returns to its initial position, thereby gripping the photographing device. Therefore, the use thereof is convenient, with good user experience, which improves the competitiveness of the product.
2. In the holding mechanism provided by the present invention, the locking structure comprises a blocking structure and a second resilient biasing member, wherein, when the movable holding gripper is at the initial position, the blocking structure is constrained at the non-locking position by the movable holding gripper, so that the movable holding gripper is able to move back and forth from the initial position to a position not surpassing the trigger position; when the movable holding gripper is moved in a direction away from the other holding gripper to surpass the trigger position under an external force, the blocking structure moves from the non-locking position to the locking position, under the force exerted by the second resilient biasing member, where the movable holding gripper is abutted against by the blocking structure and thus blocked from returning to the initial position.
3. In the holding mechanism provided by the present invention, the constraint of the movable holding gripper to the blocking structure is released when an end face of the movable holding gripper which faces the other holding gripper is moved to surpass the trigger position, so that the blocking structure moves to the locking position where the blocking structure abuts against the inner end face of the movable holding gripper so as to block the movable holding gripper from returning to the initial position.
4. In the holding mechanism provided by the present invention, both of the holding grippers are movable holding grippers that are able to move away from each other under an external force, when the distance between the two holding grippers becomes larger than the width of the blocking structure along the moving direction of the holding grippers, the blocking structure moves from the non-locking position to the locking position under the elastic biasing force exerted by the second resilient biasing member, so that the blocking structure abuts against the inner end faces of the holding grippers to prevent the holding grippers from returning to the initial position. By configuring both of the holding grippers to be movable holding grippers, the pulling amplitude of either hand is reduced, and the operation is more fast and convenient by pulling the holding grippers with both hands.
5. In the holding mechanism provided by the present invention, the movable holding gripper has a sliding portion slidably connected to the holding base and a gripping portion provided on the sliding portion, wherein, an accommodation space for the sliding portion to be inserted into is formed between the blocking structure and the holding base or formed in the blocking structure itself, the movable holding gripper is in a slidable fitting with the accommodation space; when the blocking structure is in the non-locking position, the sliding portion is able to slide freely along the accommodation space; when the movable holding gripper moves to such an extent that its end face reaches the trigger position, the blocking structure moves to the locking position under the force exerted by the second resilient biasing member, so that the accommodation space is unaligned with the sliding portion, and thus an end face of the accommodation space abuts against an end face of the sliding portion, thereby blocking the movable holding gripper from returning to the initial position; the unlocking component is able to drive the blocking structure to return to the non-locking position where the accommodation space is realigned with the sliding portion of the movable holding gripper, so that the sliding portion retracts into the accommodation space under the force exerted by the first resilient biasing member so as to cause the movable holding gripper to return to the initial position. The structural design of the blocking structure is simple and clever, which does not interfere with the movement of the movable holding gripper relative to the holding base and at the same time realizes automatic locking of the movable holding gripper.
6. In the holding mechanism provided by the present invention, the blocking structure comprises one blocking member disposed between the two holding grippers, wherein, the width of the blocking member along the moving direction of the holding gripper is consistent with the distance between the two trigger positions corresponding to the two holding grippers. By only setting one blocking member, the structure is simplified, the assembling efficiency is increased, and the cooperation of the components becomes more fluent and flexible.
7. In the holding mechanism provided by the present invention, the moving direction of the blocking structure is perpendicular to the moving direction of the holding gripper, which makes the moving stroke of the blocking structure shortest, thereby helping to reduce the volume of the holding base and improve the compactness of the structure.
8. In the holding mechanism provided by the present invention, the locking structure comprises a second guide structure for guiding the movement of the blocking structure, which makes the movement of the blocking structure more stable and fast, without jam.
9. In the holding mechanism provided by the present invention, the unlocking component comprises a reset button provided on one side of the blocking structure which is away from the second resilient biasing member, the reset button is configured to protrude out of the holding base, therefore, the user only needs to press the reset button to cause the holding gripper in an open state to automatically return to the initial position for gripping the photographing device.
10. In the holding mechanism provided by the present invention, a soft pad is provided on a surface of a holding base cover, which increases the friction force between the holding base cover and the photographing device and thus further enhances the fastening strength towards the photographing device.
11. The handheld stabilizer provided by the present invention, comprising the aforementioned holding mechanism, is convenient and fast for securely and reliably gripping a photographing device, with good user experience, which improves the competitiveness of the product.
12. In the handheld stabilizer provided by the present invention, a storage battery and a recharging port are provided in a handle thereof, so that power can be supplied to an electronic device such as the photographing device; the handle also has an indicator light for indicating a battery level of the storage battery, so that the user can know the power status of the storage battery in time; a mirror and a fill light are provided on one side of the handle away from the holding mechanism, which are for doing selfies; the handle has a photographing button for controlling a photographing device, which is convenient to control.

### Brief Description of the Drawings

In order to more clearly describe the technical schemes in the specific embodiments of the present application or in the prior art, hereinafter, the accompanying drawings required to be used for describing the specific embodiments or the prior art will be briefly introduced. Apparently, the drawings described below show some of the embodiments of present application, and for a person skilled in the art, without expenditure of creative labor, other drawings can be derived on the basis of these accompanying drawings.
Figure 1 is a structural schematic diagram of the holding mechanism provided in Embodiment 1 of the present invention;
Figure 2 is a structural schematic diagram of the holding mechanism shown in Figure 1;
Figure 3 is an exploded view of the holding mechanism shown in Figure 1;
Figure 4 is an enlarged view of part A shown in Figure 3;
Figure 5 is a structural schematic diagram of the sliding portion shown in Figure 1;
Figure 6 is a structural schematic diagram of the blocking structure shown in Figure 1;

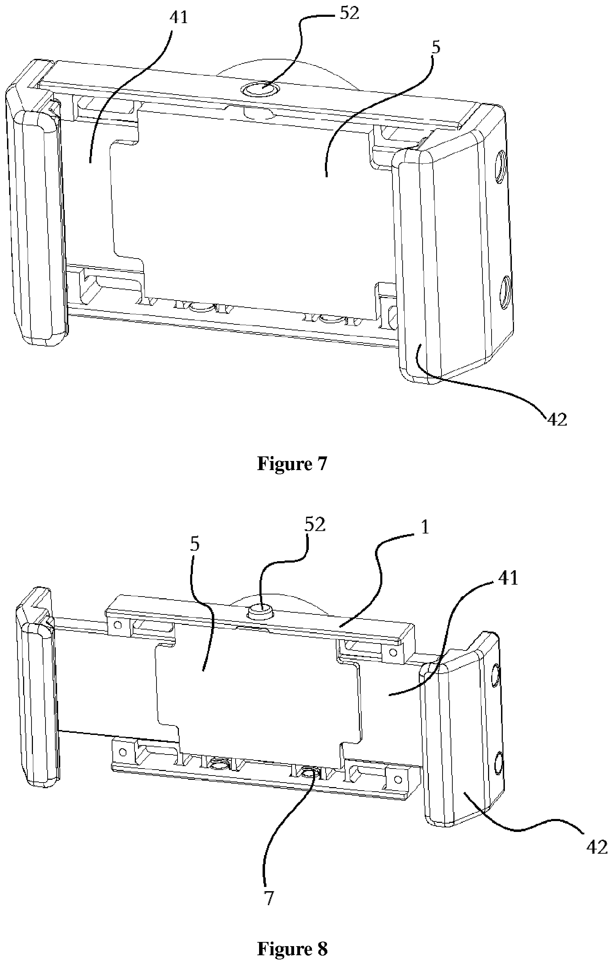

Figure 7 is a structural schematic diagram of the holding mechanism in a gripping state, with the holding base cover removed;
Figure 8 is a structural schematic diagram of the holding mechanism in an open state, with the holding base cover removed.

### Reference numerals:

1- holding base
11- button hole
12- holding base cover
2- first guide structure
21- guide bar
22- first guide groove
23- stopper block
3- first resilient biasing member
4- holding gripper
41- sliding portion
42- gripping portion
5- blocking structure
51- accommodation space
52- reset button
6- second guide structure
61- guide strip
62- second guide groove
63- blind hole
7- second resilient biasing member
8- mirror
9- fill light
91- fill light button
101- indicator light
102- photographing button
103- handle

### Detailed Description of Embodiments

A clear and complete description of the technical schemes of the present application is given below, in conjunction with the accompanying drawings. Apparently, the described embodiments are a part, but not all, of the embodiments of the present application. All the other embodiments, derived by a person skilled in the art on the basis of the embodiments described in the present application without expenditure of creative labor, are included in the protection scope of the present application.

In the description of the present invention, it needs to be noted that, terms such as "center", "above", "below", "left", "right", "vertical", "horizontal", "inside", "outside" refer to the orientation or positional relation based on the illustration of the drawings, which is merely for facilitating and simplifying the description of the present invention, not for indicating or implying that the referred apparatus or component must have a particular orientation or must be configured or operated in a particular orientation, therefore is not to be construed as a limitation towards the present invention. In addition, terms such as "first", "second", "third" are merely for the purpose of description, and are not to be construed as an indication or implication of relative importance thereof.

In the description of the present application, it needs to be noted that, unless specifically defined or restricted otherwise, terms such as "mount", "interconnect", "connect" should be broadly construed, for example, they may be fixed connection or detachable connection or integral connection; they may be mechanical connection or electrical connection; they may be direct connection, or indirect connection via an intermediate medium, or internal communication between two units. For a person skilled in the art, the specific meaning of the aforementioned terms in the present application can be understood according to specific situations thereof.

Furthermore, the technical features involved in the various embodiments of the present application described below can be combined with one another as long as they do not conflict with one another.

### Embodiment 1

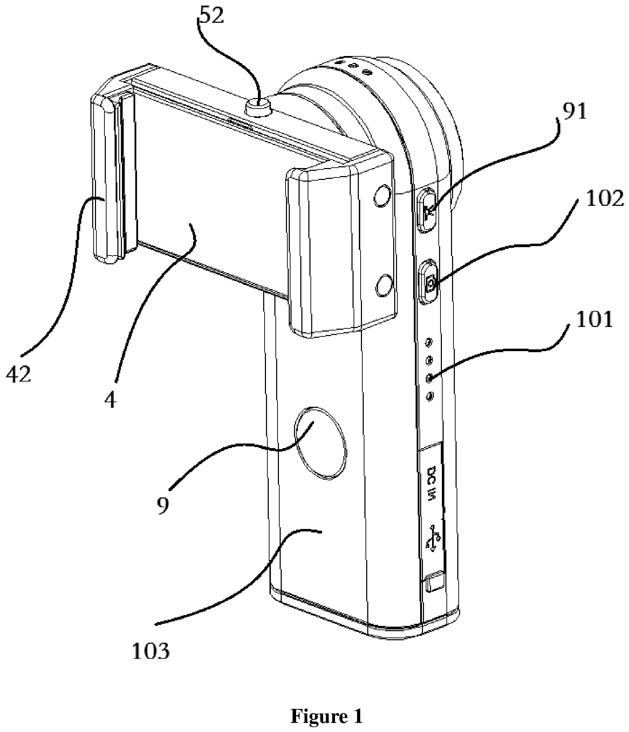

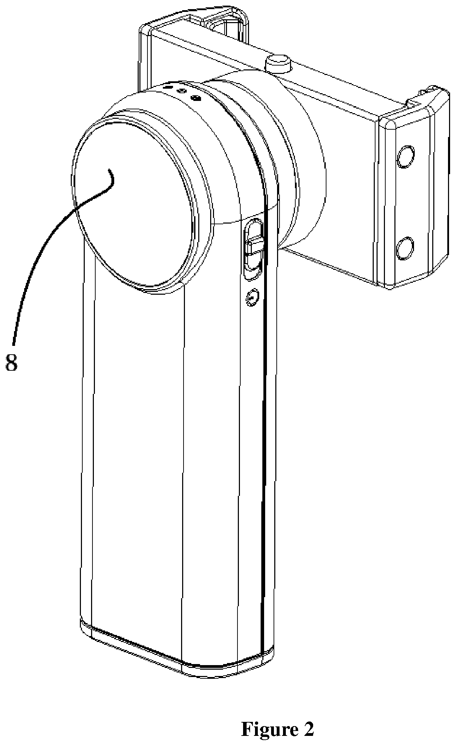

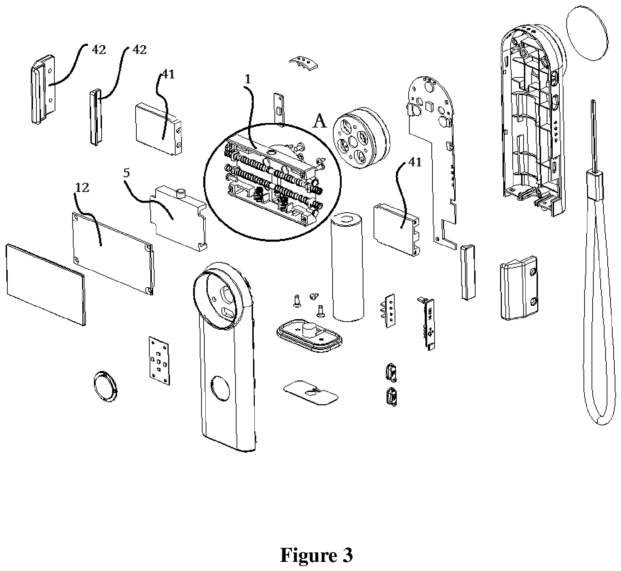

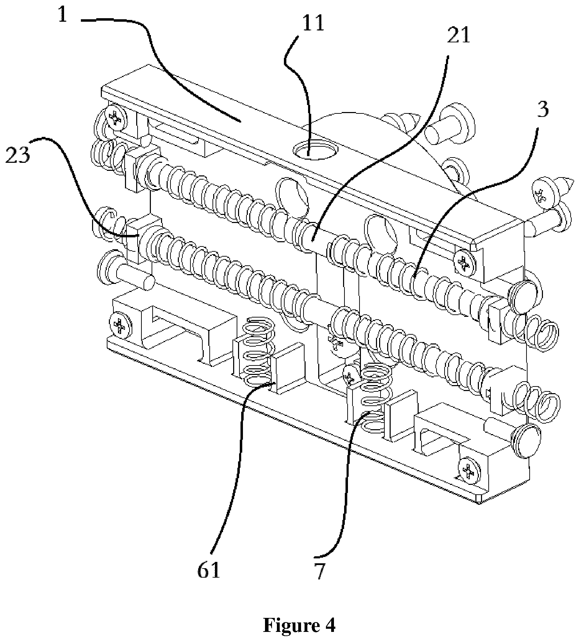

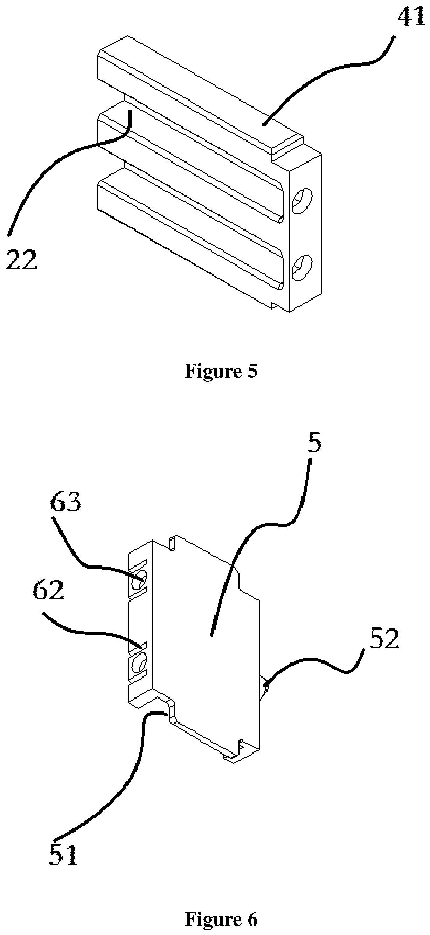

As shown in Figure 1 to Figure 6, the holding mechanism provided by this embodiment comprises a holding base 1, a pair of holding grippers 4 provided on the holding base 1, a first resilient biasing member 3, a locking structure and an unlocking component, wherein, both of the holding grippers 4 are movable holding grippers which is able to return to their initial positions under a force exerted by the first resilient biasing member 3; the movable holding gripper is operable to move to a trigger position in a direction away from the other holding gripper 4 when an external force is exerted thereon, and the locking structure is triggered to lock the movable holding gripper when the movable holding gripper reaches the trigger position, so as to block the movable holding gripper from returning to its initial position; the unlocking component is configured to unlock the locking structure, so as to remove the blockage of the locking structure to the movable holding gripper such that the movable holding gripper is released and returns to its initial position for gripping. Such configuration allows the movable holding gripper of the holding mechanism to automatically become locked once pulled to reach the trigger position, without requiring manual holding or manipulating other components for locking the movable holding gripper; after the movable holding gripper becomes automatically locked, the movable holding gripper can be maintained in an open state when a photographing device is put on the holding base 1; then, by actuating the unlocking component, the blockage of the locking structure to the movable holding gripper is removed, so that the movable holding gripper is released and automatically returns to its initial position, thereby gripping the photographing device. Therefore, the holding mechanism is convenient to use, with good user experience, which improves the competitiveness of the product.

The locking structure comprises a blocking structure 5 and a second resilient biasing member 7, wherein, when the movable holding gripper is at the initial position, the blocking structure 5 is constrained at the non-locking position by the movable holding gripper, so that the movable holding gripper is able to move back and forth from the initial position to a position not surpassing the trigger position; when the movable holding gripper is moved in a direction away from the other holding gripper 4 to surpass the trigger position under an external force, the blocking structure 5 moves from the non-locking position to the locking position, under the force exerted by the second resilient biasing member 7, where the movable holding gripper is abutted against by the blocking structure and thus blocked from returning to the initial position.

The holding base 1 is a rectangular unit with U-shaped end faces, with a first guide structure 2 provided thereon. The pair of holding grippers 4 are oppositely disposed along the longitudinal direction of the holding base 1, either of the holding grippers 4 has a sliding portion 41 and a gripping portion 42 that are connected together, the gripping portion 42 is connected on one axial end of the sliding portion 41, the sliding portion 41 slidably engages with the first guide structure 2 so as to be able to move back and forth relative to the holding base 1. The first guide structure 2 comprises two parallel guide bars 21 fixedly provided on the holding base 1, and two first guide grooves 22 formed in the sliding portion 41 and disposed corresponding to the guide bars 21, wherein, the first guide groove 22 is a U-shaped groove with an opening oriented towards the holding base 1, one end of the U-shaped groove away from the gripping portion 42 is configured to be an closed end and is formed with a guide hole for the guide bar 21 to pass through, so as to allow the sliding portion 41 to move stably along the guide bar 21; a stopper block 23 provided on an outer end of the guide bar 21, the first guide groove 22 is able to slide past the stopper block 23, and when the sliding portion 41 moves along the guide bar 21 in an opening direction of the holding base 1 and reaches the position of the stopper block 23, the closed end formed with the guide hole abuts against the stopper block 23 so as to stop the sliding portion 41 from slipping off the guide bar 21; the first resilient biasing member 3 sleeved on the guide bar 21 is a first resilient pressure spring, one axial end of the first resilient pressure spring abuts against the stopper block 23, and the other axial end of the first resilient pressure spring abuts against the closed end of the U-shaped groove of the sliding portion 41, and in such a way, the resilient pressure spring exerts a returning force on the sliding portion 41 so as to cause it to drive the gripping portion 42 to return to the initial position.

When the oppositely arranged end faces of the two holding grippers 4 move into their corresponding trigger positions, the constraint of the holding grippers 4 to the blocking structure 5 is released, so that the blocking structure 5 moves into the locking position and abuts against the end faces of the holding grippers 4, thereby blocking the holding grippers 4 from returning to the initial position. The blocking structure 5 comprises one blocking member disposed between the two holding grippers 4, the blocking member is a rectangular member with U-shaped end faces and has a width smaller than that of the holding base 1, the blocking member is fitted inside the U-shaped structure of the holding base 1 so as to form an accommodation space 51 between the blocking member and the holding base 1, the two guide bars 21 are configured to pass through this accommodation space 51. When the blocking member is at the non-locking position, the accommodation space 51 is aligned with the sliding portions 41 of the two holding grippers 4 so that the sliding portions 41 are just able to slide back and forth along the accommodation space 51. When the two holding grippers 4 move away from each other to such an extent that the distance between the two holding grippers 4 becomes larger than the width of the blocking member along the moving direction of the holding grippers 4, the trigger position is reached, where the blocking member moves into the locking position, along a direction perpendicular to the moving direction of the holding grippers 4, under the force exerted by the second resilient biasing member 7, so that the accommodation space 51 is unaligned with the sliding portion 41, causing the two end faces of the blocking member to abut against the end face of the sliding portion 41, thereby blocking the sliding portions 41 from returning to the initial position, as a result, the holding grippers 4 are locked in the open state. A second guide structure 6 is provided between the blocking member and the holding base 1, the second guide structure 6 comprises two pairs of guide strips 61 spaced apart on a side wall of the holding base and oriented perpendicular to the moving direction of the holding grippers 4, and two pairs of second guide grooves 62 formed in a side wall of the blocking member and configured for the guide strips 61 to insert into. A second resilient biasing member 7 is provided between either pair of the guide strips 61 and is configured to be a second resilient pressure spring, blind holes 63 for receiving the second resilient pressure springs are provided on the same side wall of the blocking member, one axial end of the second resilient pressure spring abuts against the side wall of the holding base 1, and the other axial end of the second resilient pressure spring extends into the blind hole 63 to abut against the blocking member. As the blind holes 63 guide the movement of the second resilient pressure springs, the blocking member can move stably between the locking position and the non-locking position.

The unlocking component comprises a reset button 52 provided on one side of the blocking member which is away from the second resilient biasing member 7, and a button hole 11 provided in a side wall of the holding base 1 for the reset button 52 to pass through. When the reset button 52 is pressed down, the reset button 52 drives the blocking member to move towards the non-locking position against the pressure of the second resilient biasing member 7. In the contrary, when the holding grippers 4 are pulled open, the blocking member moves towards the locking position under the returning force exerted by the second resilient biasing member 7, and thus the reset button 52 protrudes out of the button hole 11.

A holding base cover 12 is provided on the holding base 1, for forming a mounting space with the holding base 1. The first guide structure 2, the second guide structure 6, the first resilient biasing member 3, the second resilient biasing member 7, the blocking member, and the sliding portions 41 of the holding grippers 4 are all disposed within the mounting space. A soft pad is also provided on a surface of the holding base cover 12.

This embodiment further provides a handheld stabilizer comprising the aforementioned holding mechanism. The handheld stabilizer is a single-shaft handheld stabilizer with a handle 103, and the holding mechanism is provided on the handle 103. A storage battery and a recharging port is provided in the handle 103, so that power can be supplied to an electronic device such as the photographing device, and the storage battery can be recharged as well; the handle 103 also has an indicator light 101 for indicating a battery level of the storage battery, so that the user can know the power status of the storage battery in time; the handle 103 also has a power button for controlling the power on and power off of the handheld stabilizer, and a working indication light for displaying the working condition of a motor of the handheld stabilizer; a mirror 8 and a fill light 9 are provided on one side of the handle 103 away from the holding mechanism, which can be used for self-photographing; the handle 103 has a photographing button 102 for controlling a photographing device, which is convenient to control.

The holding mechanism is pivotally connected on the handle 103.

As an alternative to Embodiment 1, one of the two holding grippers is a movable, and the other one is a fixed holding gripper with its sliding portion fixedly connected to the holding base and not extending into the accommodation space of the blocking structure.

As an alternative to Embodiment 1, the first guide structure comprises a sliding groove or sliding bar formed on an inner surface of a side wall of the holding base, and a corresponding sliding bar or sliding groove is formed on the sliding portion for slidably engaging therewith; the blocking member is provided between the two holding grippers and is a blocking bulk without any accommodation space; the second guide structure that guides the blocking member is a guide groove formed on a bottom surface of the holding base, the blocking member can move back and forth along the guide groove between the locking position and the non-locking position; when the two holding grippers move away from each other to such an extent that the distance between the two holding grippers becomes larger than the width of the blocking bulk along the moving direction of the holding grippers, the blocking bulk moves into the locking position, along a direction perpendicular to the moving direction of the holding grippers, under the force exerted by the second resilient biasing member, so that the two end faces of the blocking bulk abut against the holding grippers so as to block the holding grippers from returning to the initial position; when the reset button on the blocking bulk is pressed down, it drives the blocking bulk to return to the non-locking position, so that the holding grippers return to the initial position.

As an alternative to Embodiment 1, the sliding portion has a groove formed along its sliding direction on one side thereof, the blocking member comprises at least one blocking bulk individually corresponding to at least one movable holding gripper; when the movable holding gripper moves into the trigger position, the corresponding blocking bulk is moved into the groove by the force exerted by the second resilient biasing member, so as to block the movable holding gripper from returning to the initial position; the unlocking component comprises a pull ring provided on one side of the blocking bulk away from the sliding portion, and a pull ring hole formed in a side wall of the holding base, which allows the pull ring to extend out but prevents the blocking bulk from slipping out; when the pull ring is pulled, it drives the blocking bulk to move out of the groove on the sliding portion, so that the constraint to the movable holding gripper is removed, and thus the movable holding gripper returns to the initial position under the force exerted by the first resilient biasing member.

As an alternative to Embodiment 1, the blocking structure comprises two blocking members individually corresponding to two movable holding grippers; the distance between the trigger positions of the two holding grippers becomes larger than the distance between the back-to-back arranged outer end faces of the two blocking members; when either one of the holding grippers moves into its trigger position, the corresponding blocking member moves from the non-locking position to the locking position, so as to block the holding gripper from returning to the initial position.

As an alternative to Embodiment 1, the holding gripper comprises a sliding portion slidably engaging with the holding base, and gripping portions connected on the sliding portion, wherein, multiple gripping portions are provided on a sliding portion of one holding gripper.

As an alternative to Embodiment 1, the gripping portion and the sliding portion are integrally formed.

As an alternative to Embodiment 1, the first resilient biasing member and/or the second resilient biasing member is an elastic rubber block.

As an alternative to Embodiment 1, the blocking structure is a rectangular member with an accommodation space formed inside it along its longitudinal direction, and the accommodation space is configured to slidably engage with the sliding portion of the holding gripper.

As an alternative to Embodiment 1, the blocking structure is slanted by an angle relative to the moving direction of the holding gripper, and a corresponding end face of the holding gripper is configured to be a slanted face.

As an alternative to Embodiment 1, the surface of the holding base cover is not provided with a soft pad, but instead is configured to have corrugations.

As an alternative to Embodiment 1, the handheld stabilizer is a multi-shaft handheld stabilizer

As an alternative to Embodiment 1, the handheld stabilizer is a, ordinary selfie stick.

Apparently, the aforementioned embodiments are merely examples illustrated for clearly describing the present application, rather than limiting the implementation ways thereof. For a person skilled in the art, various changes and modifications in other different forms can be made on the basis of the aforementioned description. It is unnecessary and impossible to exhaustively list all the implementation ways herein. However, any obvious changes or modifications derived from the aforementioned description are intended to be embraced within the protection scope of the present application.

## Claims

1. A holding mechanism, comprising:
a holding base (1), having two oppositely arranged holding grippers (4) provided thereon, wherein, at least one of the two holding grippers (4) is a movable holding gripper, which is able to move back and forth relative to the holding base (1) so as to move towards or away from the other holding gripper (4);
a first resilient biasing member (3), provided between the holding base (1) and the movable holding gripper, and exerting an elastic biasing force on the movable holding gripper to cause the movable holding gripper to have a tendency to return to its initial position;
**characterized in** further comprising:
a locking structure and an unlocking component respectively provided on the holding base (1);
the movable holding gripper is operable to move to a trigger position in a direction away from the other holding gripper (4) when an external force is exerted thereon, and the locking structure is triggered to lock the movable holding gripper when the movable holding gripper reaches the trigger position, so as to block the movable holding gripper from returning to its initial position under the force exerted by the first resilient biasing member (3);
the unlocking component is configured to unlock the locking structure, so as to remove the blockage of the locking structure to the movable holding gripper.

2. The holding mechanism according to Claim 1, **characterized in that**, the locking structure comprises:
a blocking structure (5) provided on the holding base (1) and movable between a locking position and a non-locking position;
a second resilient biasing member (7) provided between the holding base (1) and the blocking structure (5), for exerting an elastic biasing force on the blocking structure (5), when the movable holding gripper is at the initial position, the blocking structure (5) is constrained at the non-locking position by the movable holding gripper, so that the movable holding gripper is able to move back and forth from the initial position to a position not surpassing the trigger position; when the movable holding gripper is moved to surpass the trigger position by an external force, the constraint to the blocking structure (5) is released, so that the blocking structure (5) is able to move from the non-locking position to the locking position under the force exerted by the second resilient biasing member (7), where the movable holding gripper is blocked from moving towards the initial position;
wherein, the unlocking component provided on the holding base (1), with an external force, is able to overcome the force exerted by the second resilient biasing member (7) and drive the blocking structure (5) to return to the non-locking position, so that the movable holding gripper returns to the initial position under the force exerted by the first resilient biasing member (3), where the blocking structure (5) is constrained.

3. The holding mechanism according to Claim 2, **characterized in that**, the constraint to the blocking structure (5) is released when an end face of the movable holding gripper which faces the other holding gripper (4) reaches the trigger position.

4. The holding mechanism according to Claim 2 or 3, **characterized in that**, both of the holding grippers (4) are movable holding grippers.

5. The holding mechanism according to any one of Claims 2-4, **characterized in that**, the movable holding gripper has a gripping portion (42) and a sliding portion (41) slidably connected to the holding base (1), when the blocking structure (5) is in an unlocked state, an accommodation space (51) for the sliding portion (41) to be inserted into is formed in the blocking structure (5) or between the blocking structure (5) and the holding base (1), the movable holding gripper is in a slidable fitting with the accommodation space (51) until the movable holding gripper moves to the trigger position where the sliding portion (41) slips out of the accommodation space (51), and then the blocking structure (5) moves to the locking position where the accommodation space (51) is unaligned with the sliding portion (41) under the force exerted by the second resilient biasing member (7), so that the blocking structure (5) abuts against an end face of the sliding portion (41); the unlocking component is able to drive the blocking structure (5) to return to the non-locking position where the accommodation space (51) is aligned with the sliding portion (41), so that the sliding portion (41) retracts into the accommodation space (51) under the force exerted by the first resilient biasing member (3) so as to cause the movable holding gripper to return to the initial position.

6. The holding mechanism according to any one of Claims 2-5, **characterized in that**, the blocking structure (5) comprises one blocking member disposed between the two holding grippers (4), when at least one of the holding grippers (4) is moved such that the distance between the two holding grippers (4) becomes larger than the width of the blocking member along the moving direction of the at least one of the holding gripper (4), the trigger position is reached.

7. The holding mechanism according to any one of Claims 2-6, **characterized in that**, the moving direction of the blocking structure (5) is perpendicular to the moving direction of the at least one of the holding grippers (4).

8. The holding mechanism according to any one of Claims 2-7, **characterized in that**, the locking structure comprises a second guide structure (6) for guiding the movement of the blocking structure (5).

9. The holding mechanism according to Claim 8, **characterized in that**, the second guide structure (6) comprises a guide strip (61) provided on the holding base (1) and a second guide groove (62) provided on the blocking structure (5) which slidably engages with the guide strip (61); or, the second guide structure (6) comprises a second guide groove (62) provided on the holding base (1) and a guide strip (61) provided on the blocking structure (5) which slidably engages with the second guide groove (62).

10. The holding mechanism according to Claim 8 or 9, **characterized in that**, the second resilient biasing member (7) is a second resilient pressure spring arranged along the guiding direction of the second guide structure (6), one axial end of the second resilient pressure spring abuts against the holding base (1), and the other axial end of the second resilient pressure spring abuts against the blocking structure (5).

11. The holding mechanism according to Claim 10, **characterized in that**, the blocking structure (5) has a blind hole (63) for receiving the second resilient pressure spring, and said other axial end of the second resilient pressure spring extends into the blind hole (63) so as to abut against the blocking structure (5).

12. The holding mechanism according to any one of Claims 2-11, **characterized in that**, the unlocking component comprises a reset button (52) provided on one side of the blocking structure (5) which is away from the second resilient biasing member (7), and a button hole (11) provided in the holding base (1) for the reset button (52) to pass through, when the reset button (52) is pressed down, the reset button (52) drives the blocking structure (5) to move to the non-locking position.

13. The holding mechanism according to Claim 5, **characterized in** further comprising a first guide structure (2) provided on the holding base (1), the at least one of the holding grippers (4) is able to move back and forth relative to the holding base (1) by means of the first guide structure (2).

14. The holding mechanism according to Claim 13, **characterized in that**, the first guide structure (2) comprises a guide bar (21) provided on the holding base (1), a first guide groove (22) provided on the at least one of the holding grippers (4) for the guide bar (21) to pass along, and a stopper member for preventing the at least one of the holding grippers (4) from slipping off the guide bar (21); the guide bar (21) is disposed to extend through the accommodation space (51).

15. The holding mechanism according to Claim 14, **characterized in that**, the stopper member is a stopper block (23) provided on one end of the guide bar (21) pointing towards the gripping portion (42), the first guide groove (22) is disposed on the sliding portion (41) of the at least one of the holding grippers (4), the first guide groove (22) is able to slide past the stopper block (23), one end of the first guide groove (22) away from the gripping portion (42) is a closed end and is formed with a guide hole for the guide bar (21) to pass through, the closed end of the first guide groove (22) is able to abut against the stopper block (23) so as to stop the sliding portion (41) from slipping off the guide bar (21).

16. The holding mechanism according to Claim 15, **characterized in that**, the first resilient biasing member (3) is a first resilient pressure spring sleeved on the guide bar (21), one axial end of the first resilient pressure spring abuts against the closed end of the first guide groove (22), and the other axial end of the first resilient pressure spring abuts against the stopper block (23).

17. The holding mechanism according to any one of Claims 1-16, **characterized in** further comprising a holding base cover (12) for forming a mounting space with the holding base (1), the sliding portion (41) of the at least one of the holding grippers (4), the first resilient biasing member (3) and the locking structure are all disposed within the mounting space.

18. The holding mechanism according to Claim 17, **characterized in that**, a soft pad is provided on a surface of the holding base cover (12).

19. A handheld stabilizer, **characterized in** comprising the holding mechanism according to any one of Claims 1-18.

20. The handheld stabilizer according to Claim 19, **characterized in that**, a handle (103) of the handheld stabilizer is provided with a storage battery therein, and the handle (103) has a recharging port for supplying power to the storage battery and/or electronic devices therein.

21. The handheld stabilizer according to Claim 20, **characterized in that**, the handle (103) also has an indicator light (101) for indicating a battery level of the storage battery.

22. The handheld stabilizer according to any one of Claims 19-21, **characterized in that**, a mirror (8) is provided on one side of the handle (103) away from the holding mechanism.

23. The handheld stabilizer according to any one of Claims 19-22, **characterized in that**, a fill light (9) is provided on one side of the handle (103) away from the holding mechanism, and the handle (103) has a fill light button (91) for controlling the switching on and switching off of the fill light (9).

24. The handheld stabilizer according to any one of Claims 19-23, **characterized in that**, the handle (103) has a photographing button (102) for controlling the photographing operation of a photographing device.
